# EUROPEAN PATENT APPLICATION

(11) **EP 4 711 331 A1**
(43) Date of publication of application: **18.03.2026**
(21) Application number: 24839423.1
(22) Date of filing: 17.06.2024
(51) Int. Cl.: C01B 25/36, C01B 25/37, C21C 5/28, C22B 3/08, C22B 3/10, C22B 3/16, C22B 7/04

(54) **METHOD FOR PRODUCING PHOSPHATE**

(30) Priority: 12.07.2023 JP 2023114247
(71) Applicant: JFE Steel Corporation, Tokyo, 100-0011 (JP); Tokushima University, Tokushima-shi, Tokushima 770-8501 (JP)
(72) Inventor: YANO, Hiromu, Tokyo 100-0011 (JP); MATSUNAGA, Hisahiro, Tokyo 100-0011 (JP); TAKAHASHI, Katsunori, Tokyo 100-0011 (JP); SUGIYAMA, Shigeru, Tokushima-shi, Tokushima 770-8501 (JP)
(74) Representative: Grünecker Patent- und Rechtsanwälte PartG mbB
(86) International application number: PCT/JP2024/021853
(87) International publication number: WO 2025/013527

(57) **Abstract**

Provided is a method for producing a phosphate capable of easily producing a target phosphate. This method for producing a phosphate includes: an acid leaching step (S1) of leaching a component contained in a starting material containing phosphorus into an acid to obtain a phosphorus-containing liquid; and a precipitation formation step (S2) of adding an alkali to the phosphorus-containing liquid to obtain a precipitate containing a phosphate, wherein in the precipitation formation step (S2), the pH of the phosphorus-containing liquid is adjusted according to the temperature of the phosphorus-containing liquid.

## Description

### TECHNICAL FIELD

The present invention relates to a method for producing a phosphate.

### BACKGROUND ART

Phosphorus is a resource that is used in a wide range of fields such as agriculture, food, medicine, and industry and is unevenly distributed worldwide, and the production countries are limited to China, the United States, Morocco, and the like.

Phosphorus resources distributed in Japan are phosphorus products such as yellow phosphorus and crude phosphoric acid, or phosphate rocks which are raw materials of these, and the entire supply is dependent on imports.

Incidentally, the phosphorus concentration of hot metal extracted from a blast furnace is about 0.1 mass%. Then, the phosphoric acid concentration in steelmaking slag generated by subjecting this hot metal to a conventional general treatment (a dephosphorization treatment, decarburization refining) is as low as at most about 5 mass% in terms of P₂O₅.

For this reason, the steelmaking slag is used as a material for civil engineering such as a roadbed material, and phosphorus in the steelmaking slag has not been recovered.

However, in recent years, since the price of phosphorus resources has increased due to depletion of phosphate rocks, enclosure of phosphate rocks by China, the United States, and the like, phosphorus in steelmaking slag generated during steel smelting has been reevaluated as a valuable phosphorus resource.

Patent Literature 1 discloses a method for recovering phosphorus in the form of a phosphate (that is, producing a phosphate) from dephosphorized slag, which is a type of steelmaking slag.

### CITATION LIST

### PATENT LITERATURE

Patent Literature 1: JP 2022-150640 A

### SUMMARY OF INVENTION

### TECHNICAL PROBLEMS

The method described in Patent Literature 1 is a method including many steps, and is very complicated, and may take a lot of time to obtain a target phosphate. In addition, Patent Literature 1 substantially describes only a method for producing calcium phosphate.

The present invention has been made in view of the above points, and an object thereof is to provide a method for producing a phosphate capable of easily producing a target phosphate.

### SOLUTION TO PROBLEMS

As a result of intensive studies, the present inventors have found that the above object is achieved by adopting the following configuration, and have completed the present invention.

That is, the present invention provides the following [1] to [6].
[1] A method for producing a phosphate comprising: an acid leaching step of leaching a component contained in a starting material containing phosphorus into an acid to obtain a phosphorus-containing liquid; and a precipitation formation step of adding an alkali to the phosphorus-containing liquid to obtain a precipitate containing a phosphate, wherein in the precipitation formation step, the pH of the phosphorus-containing liquid is adjusted according to the temperature of the phosphorus-containing liquid.
[2] The method for producing a phosphate according to [1] above, wherein the phosphate is at least one selected from a group consisting of iron phosphate and aluminum phosphate.
[3] The method for producing a phosphate according to [1] or [2] above, wherein the starting material contains at least CaO, P₂O₅, Al₂O₃, and FetO.
[4] The method for producing a phosphate according to any one of [1] to [3] above, wherein the starting material is steelmaking slag.
[5] The method for producing a phosphate according to any one of [1] to [4], wherein in the acid leaching step, at least one selected from a group consisting of nitric acid, hydrochloric acid, sulfuric acid, phosphoric acid, and an organic acid is used as the acid.
[6] The method for producing a phosphate according to any one of [1] to [5] above, wherein in the precipitation formation step, an additional raw material is added to the phosphorus-containing liquid.

### ADVANTAGEOUS EFFECTS OF INVENTION

According to the present invention, a target phosphate can be easily produced.

### BRIEF DESCRIPTION OF DRAWINGS

[FIG. 1] FIG. 1 is a flowchart showing a flow of a method for producing a phosphate of the present embodiment.
[FIG. 2] FIG. 2 is a graph showing the relationship between the pH of a phosphorus-containing liquid and the formation amount of iron phosphate for each temperature of the phosphorus-containing liquid.
[FIG. 3] FIG. 3 is a graph showing the relationship between the pH of a phosphorus-containing liquid and the formation amount of aluminum phosphate for each temperature of the phosphorus-containing liquid.
[FIG. 4] FIG. 4 shows XRD patterns of a precipitate of Example 1.

### DESCRIPTION OF EMBODIMENTS

### [Method for producing phosphate]

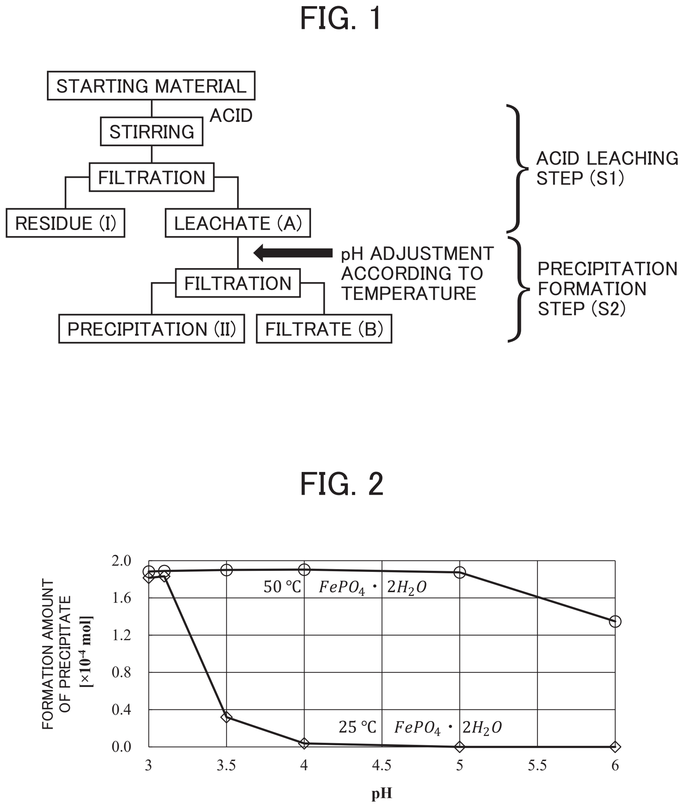

A method for producing a phosphate of the present embodiment will be described with reference to FIGS. 1 to 3.

FIG. 1 is a flowchart showing a flow of a method for producing a phosphate of the present embodiment.

The method for producing a phosphate of the present embodiment is a method for recovering phosphorus from a starting material in the form of a target phosphate (for example, at least one selected from the group consisting of iron phosphate and aluminum phosphate), and includes an acid leaching step (S1) and a precipitation formation step (S2) in this order.

### <Acid leaching step (S1)>

In the acid leaching step (S1), components contained in the starting material are leached into an acid to obtain a phosphorus-containing liquid. Specifically, for example, an acid is added to the starting material, and the mixture is stirred, and then filtered. Thereby, a residue (I) and a leachate (A) are obtained. The leachate (A) is a phosphorus-containing liquid.

Examples of the acid used in the acid leaching step (S1) include at least one selected from the group consisting of nitric acid, hydrochloric acid, sulfuric acid, phosphoric acid, and an organic acid (for example, citric acid), and nitric acid or hydrochloric acid is preferable, and nitric acid is more preferable.

The concentration of the acid is not particularly limited, but is preferably 0.1 to 1.5 M, and more preferably 0.3 to 0.8 M.

Examples of the starting material include steelmaking slag such as dephosphorized slag and decarburized slag.

The starting material is a phosphorus-containing compound (including a mixture of a phosphorus-containing compound and another compound), and preferably contains at least CaO, P₂O₅, Al₂O₃, and FetO.

The particle size of the starting material is not particularly limited.

However, for the reason that the leaching rate of phosphorus (the ratio of the phosphorus content in the resulting phosphorus-containing liquid to the phosphorus content in the starting material) increases, the particle size of the starting material (for example, steelmaking slag) is preferably as small as possible. Specifically, the particle size of the starting material is preferably 355 µm or less because the leaching rate of phosphorus is 80% at the maximum.

The expression "the particle size is 355 µm or less" means "passing through a JIS test sieve with an opening of 355 µm".

When the starting material is steelmaking slag, the pH of the acid used in the acid leaching step (S1) is preferably 4.0 or less, more preferably 1.0 or less, still more preferably 0.5 or less.

For example, in a case where the pH of the acid satisfies this range, when the ratio of the starting material to the acid increases, the Si elution amount increases accordingly, and the resulting phosphorus-containing liquid may gel. Therefore, it is preferable to set the ratio between the starting material and the acid by carefully examining the situation of each step described later.

The pH is measured in accordance with JIS Z 8802:2011 "Methods for determination of pH of aqueous solutions" (hereinafter the same shall apply). The temperature at which the pH is measured is 25°C unless otherwise specified.

The present inventors added 1.00 g of steelmaking slag having a particle size of 355 µm or less to 100 mL of nitric acid (concentration: 0.5 M) and then stirred to obtain a phosphorus-containing liquid. At this time, the leaching time (stirring time) was appropriately changed within a range of 0.1 to 2.0 h. The relationship between the composition (content of each element) of the obtained phosphorus-containing liquid and the leaching time is shown in Table 1 below.

### [Table 1]

**Table 1**

| | Composition [mmol/100 mL] | | | | | | |
|---|---|---|---|---|---|---|---|
| | P | Fe | Al | Mg | Ca | Mn | Si |
| 0.1 h | 0.19 | 0.39 | 0.12 | 0.21 | 5.07 | 0.05 | 1.25 |
| 0.2 h | 0.21 | 0.50 | 0.13 | 0.33 | 5.25 | 0.06 | 1.30 |
| 0.3 h | 0.21 | 0.63 | 0.14 | 0.44 | 5.48 | 0.08 | 1.35 |
| 0.4 h | 0.21 | 0.77 | 0.16 | 0.57 | 5.43 | 0.09 | 1.38 |
| 0.5 h | 0.21 | 0.73 | 0.16 | 0.57 | 5.26 | 0.09 | 1.37 |
| 1.0 h | 0.21 | 0.91 | 0.18 | 0.77 | 5.51 | 0.11 | 1.38 |
| 1.5 h | 0.23 | 1.00 | 0.20 | 0.87 | 5.56 | 0.12 | 1.36 |
| 2.0 h | 0.21 | 1.06 | 0.21 | 0.92 | 5.52 | 0.12 | 1.35 |

For example, a case of obtaining iron phosphate or aluminum phosphate is considered.

In this case, as can be seen from Table 1 above, the leaching time is preferably 0.4 to 0.5 h because the contents of P, Fe, and Al are high to a certain extent and the contents of other elements (Mg and the like) are not too high in the phosphorus-containing liquid obtained.

This tendency is similar even when scaled up.

### <Precipitation formation step (S2)>

In the precipitation formation step (S2), a precipitate containing a phosphate is obtained by adding an alkali to the phosphorus-containing liquid obtained in the acid leaching step (S1). Specifically, for example, an alkali is added to the phosphorus-containing liquid, and then filtration is performed. Thereby, a precipitation (II) and a filtrate (B) are obtained. The precipitation (II) is a precipitate.

Examples of the alkali used in the precipitation formation step (S2) include sodium hydroxide, potassium hydroxide, calcium hydroxide, and aqueous ammonia (NH₄OH).

Among them, aqueous ammonia is preferable because it does not have unnecessary cations, and the like.

The concentration of aqueous ammonia is not particularly limited, but is preferably 20 to 40 mass%, and more preferably 25 to 35 mass%.

Meanwhile, the present inventors adjusted the pH of the phosphorus-containing liquid by adding aqueous ammonia (concentration: 28 mass%) as the alkali to the phosphorus-containing liquid at a temperature of 25°C or 50°C, and checked the amount of a precipitate formed at that time (formation amount of precipitate). Specifically, the formation amounts of iron phosphate and aluminum phosphate contained in the precipitate were checked. The results are shown in FIGS. 2 to 3.

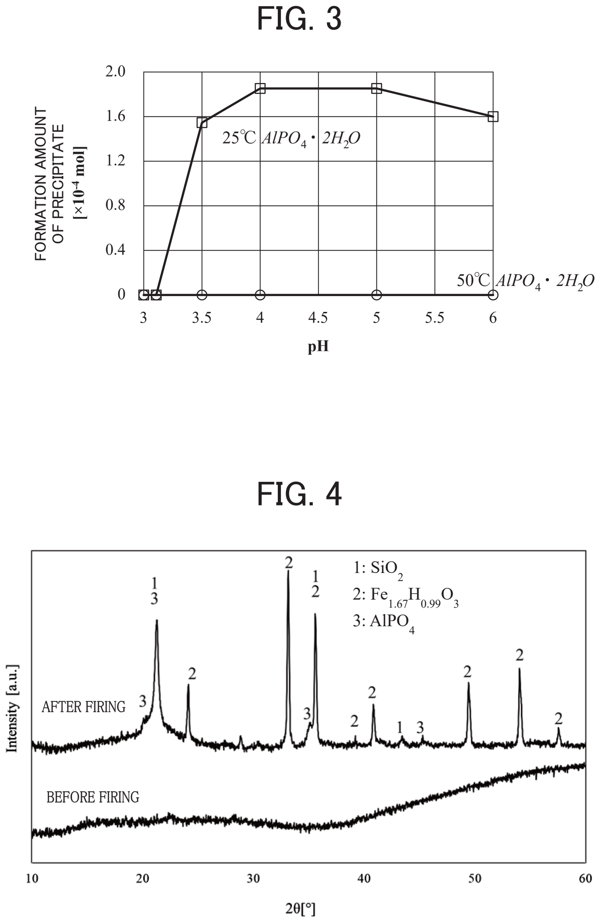

FIG. 2 is a graph showing the relationship between the pH of the phosphorus-containing liquid and the formation amount of iron phosphate for each temperature of the phosphorus-containing liquid. FIG. 3 is a graph showing the relationship between the pH of the phosphorus-containing liquid and the formation amount of aluminum phosphate for each temperature of the phosphorus-containing liquid.

The findings obtained from FIGS. 2 to 3 will be described.

First, refer to the graph when the temperature of the phosphorus-containing liquid is 25°C.

As shown in FIG. 2, at pH 3, the formation amount of iron phosphate (FePO₄·2H₂O) is large, but with an increase in pH, the formation amount of iron phosphate decreases, and instead, the formation amount of iron hydroxide (not shown in FIG. 2) increases.

On the other hand, as shown in FIG. 3, the formation amount of aluminum phosphate (AlPO₄·2H₂O) gradually increases with an increase in pH, and becomes maximum at pH 4 to 5. However, at above pH 5, the formation amount of aluminum phosphate decreases, and instead, the formation amount of aluminum hydroxide (not shown in FIG. 3) increases.

Next, refer to the graph when the temperature of the phosphorus-containing liquid is 50°C.

In this case, the pH range in which iron phosphate is formed increases (see FIG. 2), while the pH range in which aluminum phosphate is formed decreases (see FIG. 3). That is, iron phosphate is formed regardless of pH, and aluminum phosphate is not formed regardless of pH.

Based on such findings, in the present embodiment, the pH of the phosphorus-containing liquid is adjusted according to the temperature of the phosphorus-containing liquid in the precipitation formation step (S2). Thus, the target phosphate is easily obtained.

For example, when the target phosphate is aluminum phosphate, an alkali is added to the phosphorus-containing liquid at a temperature of 25°C to adjust the pH to 4 to 5. As a result, aluminum phosphate is obtained as the phosphate (however, the formed precipitate contains iron hydroxide which is a compound other than the phosphate).

For example, when the target phosphate is iron phosphate, the pH is adjusted to 4 by increasing the temperature of the phosphorus-containing liquid to 50°C and then adding an alkali. As a result, iron phosphate is obtained as the phosphate (however, the formed precipitate contains aluminum hydroxide or the like which is a compound other than the phosphate).

The temperature of the phosphorus-containing liquid is preferably 15 to 80°C, and more preferably 20 to 70°C.

The pH of the phosphorus-containing liquid after addition of the alkali is preferably 1 to 8, and more preferably 3 to 6.

When the temperature of the phosphorus-containing liquid is 25°C, it is difficult to obtain iron phosphate at pH 4 or higher. However, when the temperature of the phosphorus-containing liquid is 50°C, iron phosphate is obtained even at pH 4 or higher. That is, in the case of obtaining at least iron phosphate, the higher the temperature of the phosphorus-containing liquid, the higher the upper limit of pH.

On the other hand, when the temperature of the phosphorus-containing liquid is 50°C, it is difficult to obtain aluminum phosphate. However, when the temperature of the phosphorus-containing liquid is 25°C, aluminum phosphate is obtained at pH 3.1 or higher. That is, in the case of obtaining at least aluminum phosphate, the lower the temperature of the phosphorus-containing liquid, the wider the pH range.

Further, in the precipitation formation step (S2), an additional raw material may be added to the phosphorus-containing liquid as necessary. The additional raw material is preferably selected according to the target phosphate and the content of each element (element constituting the target phosphate) in the phosphorus-containing liquid.

For example, when iron phosphate (FePO₄) is obtained as the phosphate and P contained in the phosphorus-containing liquid is less than Fe, a phosphoric acid liquid having a concentration adjusted so that the molar ratio of Fe and P contained in the phosphorus-containing liquid is 1:1 is added as the additional raw material. As a result, Fe and P react with each other without any excess, and the purity of iron phosphate contained in the precipitate can be increased.

### EXAMPLES

Hereinafter, the present invention will be specifically described with reference to examples. However, the present invention is not limited to the examples described below.

### <Example 1>

First, in the acid leaching step (S1), steelmaking slag having a particle size of 355 µm or less was added to nitric acid (concentration: 0.5 M) and then stirred for 0.4 hours to obtain a phosphorus-containing liquid.

Next, in the precipitation formation step (S2), aqueous ammonia (concentration: 28 mass%) was added to the phosphorus-containing liquid held at a temperature of 25°C with stirring under the condition of 200 rpm to adjust the pH to 4 to form a precipitate. More specifically, the pH of the phosphorus-containing liquid was increased by adding aqueous ammonia, and the mixture was stirred for 0.5 h from the time point when the pH became constant, and then allowed to stand for 0.5 h. After standing, the mixture was filtered to obtain a filtrate and a precipitate. The obtained precipitate was crystallized by firing at 700°C.

With respect to the precipitate before and after firing, XRD patterns were obtained using an X-ray diffraction (XRD) apparatus.

FIG. 4 shows XRD patterns of the precipitate of Example 1. From the XRD patterns shown in FIG. 4, it was found that aluminum phosphate (AlPO₄) was obtained as the phosphate contained in the precipitate.

### <Example 2>

In the precipitation formation step (S2), the pH of the phosphorus-containing liquid at a temperature of 25°C was adjusted to 3. A precipitate was formed in the same manner as in Example 1 other than that.

As a result, it was found that iron phosphate (FePO₄) was obtained as the phosphate contained in the precipitate.

### <Example 3>

In the precipitation formation step (S2), the pH of the phosphorus-containing liquid at a temperature of 50°C was adjusted to 3. A precipitate was formed in the same manner as in Example 1 other than that.

As a result, it was found that iron phosphate (FePO₄) was obtained as the phosphate contained in the precipitate. The precipitate also contained iron hydroxide and aluminum hydroxide.

### <Example 4>

In the precipitation formation step (S2), the pH of the phosphorus-containing liquid at a temperature of 25°C was adjusted to 3.5. A precipitate was formed in the same manner as in Example 1 other than that.

As a result, it was found that aluminum phosphate (AlPO₄) and iron phosphate (FePO₄) were obtained in a molar ratio of 3:1 as the phosphate contained in the precipitate.

### <Example 5>

In the precipitation formation step (S2), the pH of the phosphorus-containing liquid at a temperature of 25°C was adjusted to 3, but before that, a phosphoric acid liquid having a concentration adjusted so that the molar ratio of Fe and P contained in the phosphorus-containing liquid was 1:1 was added as the additional raw material. A precipitate was formed in the same manner as in Example 1 other than that.

As a result, it was found that iron phosphate (FePO₄) was obtained as the phosphate contained in the precipitate. In addition, when the filtrate was analyzed, the contents of Fe and P were zero. That is, the purity of iron phosphate contained in the precipitate could be increased.

## Claims

1. A method for producing a phosphate comprising: an acid leaching step of leaching a component contained in a starting material containing phosphorus into an acid to obtain a phosphorus-containing liquid; and
a precipitation formation step of adding an alkali to the phosphorus-containing liquid to obtain a precipitate containing a phosphate, wherein
in the precipitation formation step, the pH of the phosphorus-containing liquid is adjusted according to the temperature of the phosphorus-containing liquid.

2. The method for producing a phosphate according to claim 1, wherein the phosphate is at least one selected from a group consisting of iron phosphate and aluminum phosphate.

3. The method for producing a phosphate according to claim 1 or 2, wherein the starting material contains at least CaO, P₂O₅, Al₂O₃, and FetO.

4. The method for producing a phosphate according to any one of claims 1 to 3, wherein the starting material is steelmaking slag.

5. The method for producing a phosphate according to any one of claims 1 to 4, wherein in the acid leaching step, at least one selected from a group consisting of nitric acid, hydrochloric acid, sulfuric acid, phosphoric acid, and an organic acid is used as the acid.

6. The method for producing a phosphate according to any one of claims 1 to 5, wherein in the precipitation formation step, an additional raw material is added to the phosphorus-containing liquid.
